# EUROPÄISCHE PATENTSCHRIFT

(11) **EP 3 712 448 B1**
(45) Veröffentlichungstag und Bekanntmachung des Hinweises auf die Patenterteilung: **23.09.2026**
(21) Anmeldenummer: 20162965.6
(22) Anmeldetag: 13.03.2020
(51) Int. Cl.: F16B 33/00, F16B 33/02

(54) **VERBINDUNGSVORRICHTUNG**
CONNECTING DEVICE
DISPOSITIF DE RACCORDEMENT

(30) Priorität: 16.03.2019 DE 102019001871
(43) Veröffentlichungstag der Anmeldung: 23.09.2020
(73) Patentinhaber: Hydac Fluidtechnik GmbH, 66280 Sulzbach/Saar (DE)
(72) Erfinder: Bill, Markus, 66571 Eppelborn (DE); Ries, Steven, 66125 Dudweiler (DE)
(74) Vertreter: Bartels und Partner, Patentanwälte

(56) Entgegenhaltungen:
- EP-A1- 0 039 559
- EP-A2- 2 163 773
- CN-A- 107 781 245
- DE-A1- 102014 003 197
- DE-U1- 202004 010 451
- US-A- 3 183 531
- US-A- 5 341 833
- US-A1- 2006 207 656
- US-B1- 6 182 697

## Beschreibung

Die Erfindung betrifft ein Cartridge-Ventil mit einem Ventilgehäuse, das eine Verbindungsvorrichtung aufweist, zumindest bestehend aus einem Außengewinde an einem Einschraubteil, das in ein Innengewinde eines Aufnahmeteils einschraubbar ist, wobei in Einschraubrichtung gesehen zumindest der erste Gewindegang des Einschraubteils derart mit einer Konturänderung gegenüber den sonstigen Gewindegängen dieses Gewindes versehen ist, dass die Bauteilverschmutzung unterbunden oder im Wesentlichen unterbunden ist, wobei das Einschraubteil Bestandteil des Ventilgehäuses des Cartridge-Ventils ist, und wobei das Aufnahmeteil für die Aufnahme des Ventilgehäuses dient.

Schraubverbindungen, vergleiche beispielsweise ROLOFF, Hermann; MA-TEK, Wilhelm: Maschinenelemente - Normung, Berechnung, Gestaltung. 7. Aufl., Braunschweig : Vieweg, 1976, Seiten 144 ff., gehören zu den in der Technik mit weitester Verbreitung eingesetzten Maschinenelementen. Neben dem Einsatz zur Bildung von Verbindungen, die die Sicherung von Bauteilen gegen den Einfluss trennender Kräfte, wie Querkräfte, bilden, gehören zum Einsatzspektrum auch Einschraubvorgänge, bei denen ein Einschraubteil in der Art eines Gewindeeinsatzes in einem Einbauraum festlegbar ist, der sich in einem Aufnahmeteil befindet und ein Innengewinde aufweist, mit dem das Einschraubteil mit seinem Außengewinde verschraubbar ist. Ein bei den Schraubvorgängen aufgrund der Relativbewegung der Fügepartner anfallender Abrieb, wie metallische Partikel oder Späne, ist bei manchen Anwendungen, bei denen Schraubeinsätze in Einbauräumen festlegbar sind, kritisch. Vornehmlich gilt dies für die Einschraubvorgänge, bei denen die bekannten Cartridge-Ventile, die als Schraubeinsätze mit Außengewinde versehen sind, in den betreffenden Einbauraum in einem zugeordneten Ventilblock eingeschraubt werden. Hierbei gebildete metallische Späne oder Partikel können bei dieser Anwendung in den Fluidkreislauf gelangen und dort die Funktionalität der Ventile stören oder deren Verschleiß erhöhen, bis hin zur Aufhebung deren Funktion.

Verbindungsvorrichtungen gehen aus der DE 20 2004 010 451 U1, der US 3 183 531 A, der DE 10 2014 003 197 A1, der EP 2 163 773 A2, der US 5 341 833 A, der US 2006/0207656 A1, der US 6 182 697 B1, der EP 0 039 559 A1 und der CN 107 781 245 A hervor.

Im Hinblick auf diese Problematik stellt sich die Erfindung die Aufgabe, ein verbessertes Cartridge-Ventil bereitzustellen.

Erfindungsgemäß ist diese Aufgabe durch eine Verbindungsvorrichtung gelöst, die die Merkmale des Patentanspruchs 1 in seiner Gesamtheit aufweist.

Gemäß dem kennzeichnenden Teil des Patentanspruchs 1 ist vorgesehen, dass es während des Einschraub¬vorgangs zwischen den Gewinden zur Bildung von metallischen Spänen und/oder Partikeln als Bauteilverschmutzung kommt, dass, in Einschraubrichtung gesehen, zumindest der erste Gewindegang des Einschraubteils derart mit einer Konturänderung gegenüber den sonstigen Gewindegängen dieses Gewindes versehen, dass die Bauteilverschmutzung unterbunden oder im Wesentlichen unterbunden ist und/oder Verschmutzungen vom Abfallen in einen Einbauraum des Aufnahmeteils abgehalten sind, dass das Einschraubteil ein Führungsteil aufweist, das über eine Verlängerung mit reduziertem Durchmesser gegenüber dem Einschraub- und dem Führungsteil an das Einschraubteil anschließt, dass die axiale Länge der Verlängerung derart gewählt ist, dass spätestens mit Eingriff des ersten Gewindeganges des Einschraubteils in den zugehörigen Gewindegang des Aufnahmeteils das Führungsteil in Anlage mit den benachbart angeordneten Wandteilen des Aufnahmeteils kommt, und dass das Cartridge-Ventil am äußeren Ende seines Ventilkörpers einen Außensechskant aufweist, von dem sich in geringem Abstand im Ventilkörper eine Ringnut als Sitz für einen Dichtring befindet. Die Erfindung macht sich den Umstand zunutze, dass das Entstehen von Verschmutzungen in erster Linie durch Einwirkung des ersten Gewindeganges des Einschraubteils, also des Außengewindes auf das Muttergewinde, verursacht ist. Mit der bei der Verbindungsvorrichtung vorgesehenen, von der normalen Gewindegeometrie abweichenden Modifikation am ersten Gewindegang ist daher eine wesentliche Reduzierung von die Funktionalität gefährdenden Verschmutzungen erzielbar.

Während bei Standard-Außengewinden am ersten Gewindegang ein angefaster Anschnitt mit einem Winkel von 45° vorgesehen ist, ist bei vorteilhaften Ausführungsbeispielen der Erfindung die Konturänderung aus einem angefasten Anschnitt am ersten Gewindegang gebildet, dessen Winkel kleiner als 40°, bevorzugt zwischen 20° und 30°, gewählt ist, oder kann aus einem gerundeten Anschnitt bestehen, so dass die Kontaktfläche des ersten Gewindeganges des Einschraubteils im zugeordneten Gewindeabschnitt des Aufnahmeteils reduziert ist. In beiden Fällen reduziert sich die Größe der Kontaktfläche an der jeweiligen Gewindeflanke des Aufnahmeteils von der Flächenberührung in Richtung auf eine angenäherte Linienberührung mit verringertem Abrieb.

Mit Vorteil kann die Konturänderung auch darin bestehen, dass der erste Gewindegang des Einschraubteils bis auf den Kerndurchmesser desselben abgedreht ist, dass vorzugsweise hierfür der erste Gewindegang des Einschraubteils vom Gewindegrund aus mit einer sich im Winkel von mindestens 10° aufweitenden Spirale überdreht ist und dass der angefaste Anschnitt vorzugsweise einen Winkel von 45° aufweist. Bei dieser Konfiguration werden eventuell entstehende Verschmutzungen gekammert und vom Einfallen in den Einbauraum abgehalten.

Mit Vorteil kann die Konturänderung ferner durch Einbringen mindestens eines Längsschlitzes parallel zur Einschraubrichtung in den ersten Gewindegang des Einschraubteils realisiert sein, wobei der angefaste Anschnitt vorzugsweise einen Winkel von 45° aufweist. Durch das Schlitzen des ersten Gewindeganges im Bereich des Gewindeanschnitts wird der Eingriff in das Muttergewinde sanfter und verhindert somit das Entstehen von Verschmutzungspartikeln.

Alternativ kann die Konturänderung darin bestehen, dass der erste Gewindegang des Einschraubteils einen kleineren Flankenwinkel als die nachfolgenden Gewindegänge desselben aufweist, so dass zumindest teilweise keine Kontaktfläche zwischen dem ersten Gewindegang des Einschraubteils und dem zugeordneten Gewindegang des Aufnahmeteils besteht. Dank des Fehlens der Kontaktfläche mit der zugewandten Flanke des Muttergewindes verursacht der erste Gewindegang keine Verschmutzung.

Die Konturänderung kann ferner darin bestehen, dass die Gewindegänge von Außen- und Innengewinde eine unterschiedliche Steigung zueinander aufweisen, vorzugsweise dass der erste Gewindegang des Einschraubteils eine kleinere Steigung aufweist als die nachfolgenden Gewindegänge desselben, so dass zumindest teilweise keine Kontaktfläche zwischen dem ersten Gewindegang des Einschraubteils und dem zugeordneten Gewindegang des Aufnahmeteils besteht. Dadurch verursacht der erste Gewindegang keine Verschmutzung und kann solche, falls ansonsten vorhanden, beim Schraubvorgang auch nicht vor sich herschieben.

Mit Vorteil kann die Konturänderung auch darin bestehen, dass, ausgehend vom ersten Gewindegang des Einschraubteils, sich Flanken- sowie Kerndurchmesser des Außengewindes gleichermaßen verändern, so dass vorzugsweise erst ab dem dritten Gewindegang des Innengewindes des Aufnahmeteils dieses in Anlage mit zugeordneten Gewindegängen des Außengewindes des Einschraubteils kommt. Bei dem entgegen der Einschraubrichtung versetzten Eingriff bleiben eventuell entstehende Verschmutzungen in diesem hinteren Bereich gekammert.

Ferner kann die Konturänderung darin bestehen, dass, in Einschraubrichtung gesehen, hinter dem angefasten Abschnitt sich anstelle des ersten Gewindeganges des Einschraubteils ein zylindrischer Abschnitt desselben anschließt, der in eine gegenüber dem sonstigen Gewindedurchmesser reduzierte Ringnut übergeht, die vorzugsweise eine Übergangsfase zum zylindrischen Abschnitt mit einem Winkel von 45° aufweist. Dadurch ist vor dem Gewinde des Einschraubteils eine Kammerung gebildet, die verhindert, dass durch Einschrauben verursachte Verschmutzungen in den Einbauraum gelangen.

Ferner kann die Konturänderung darin bestehen, dass zumindest der erste Gewindegang, vorzugsweise die ersten zwei Gewindegänge des Einschraubteils, mit einem ungleichen Flankenwinkel zu den sonstigen Gewindegängen des Einschraubteils versehen sind und dass vorzugsweise der erste Gewindegang des Einschraubteils einen tangentialen Auslauf aufweist. Wiederum verursacht der erste Gewindegang durch Fehlen der Kontaktfläche keine Verschmutzung.

Dank der bei der Erfindung erzielten Verringerung von in das Aufnahmeteil gelangenden Verschmutzungen eignet sich die Erfindung daher in besonderem Maße für die Einschraubmontage von Cartridge-Ventilen in einen das Aufnahmeteil bildenden Ventilblock, weil die Gefahr der Funktionsstörung des zugeordneten Fluidkreislaufs durch Verschmutzungseintrag in den Ventilblock minimiert ist.

Das Einschraubteil weist ein Führungsteil auf, das sich über eine Verlängerung mit reduziertem Durchmesser gegenüber dem Einschraub- und dem Führungsteil an das Einschraubteil anschließt. Vorzugsweise ist dabei ferner vorgesehen, dass das Führungsteil außenumfangsseitig ein Abdichtsystem aufweist und dass der Außendurchmesser des Führungsteils an den Innendurchmesser des Aufnahmeteils angepasst ist. Dergestalt besteht die Möglichkeit, das Innere des Aufnahmeteils, beispielsweise in Form von Teilen des fluidführenden Ventilgehäuses, gegenüber der Umgebung sicher abzuschließen respektive abzudichten.

Die axiale Länge der Verlängerung ist derart gewählt, dass spätestens mit Eingriff des ersten Gewindeganges des Einschraubteils in den zugehörigen Gewindegang des Aufnahmeteils das Führungsteil in Anlage kommt mit den benachbart angeordneten Wandteilen des Aufnahmeteils respektive des Ventilgehäuses, ist eine sichere Führung des Einschraubteils noch vor dem eigentlichen Einschraubvorgang in das Aufnahmeteil erreicht. Hierbei findet eine Art Selbstzentrierung über das Führungsteil im Aufnahmeteil statt, was den vorgesehenen Eingriff der zugehörigen Gewindegänge von Einschraubteil und Aufnahmeteil erleichtern hilft. Insbesondere kann es auch zur Entlastung von in Eingriff miteinander befindlichen Gewindegängen über das Führungsteil kommen, was insbesondere dann der Fall ist, wenn im Rahmen der Vermeidung von Bauteilverschmutzungen nicht alle Gewindegänge, die benachbart zueinander angeordnet sind in tragender Weise die auftretenden Kräfte aufnehmen sollten.

Nachstehend ist die Erfindung anhand von in der Zeichnung dargestellten Ausführungsbeispielen im Einzelnen erläutert. Es zeigen:
- Fig. 1: eine schematisch vereinfachte perspektivische Schrägansicht eines Einschraubteils in Form eines Cartridge-Ventils als Bestandteil eines ersten Ausführungsbeispiels der Verbindungsvorrichtung;
- Fig. 2: einen Längsschnitt des Ausführungsbeispiels, wobei das Cartridge-Ventil von Fig. 1 in einen das Aufnahmeteil bildenden Ventilblock eingeschraubt ist;
- Fig. 2a: einen vergrößert gezeichneten Teilausschnitt des in Fig. 2 durch ein Rechteck markierten Gewindeabschnitts, wobei der Zustand bei einer ¼ Umdrehung des Einschraubvorgangs dargestellt ist;
- Fig. 2b, 2c und 2d: der Fig. 2 entsprechende Darstellungen, wobei der Zustand bei einer halben Umdrehung, einer ¾ Umdrehung bzw. einer ganzen Umdrehung des Einschraubvorgangs dargestellt ist;
- Fig. 3 bis 4d: den Fig. 1 bis 2d entsprechende Darstellungen eines zweiten Ausführungsbeispiels der Verbindungsvorrichtung;
- Fig. 5 bis 6d: den vorstehenden Figuren entsprechende Darstellungen eines dritten Ausführungsbeispiels;
- Fig. 7 bis 8d: den vorstehenden Figuren entsprechende Darstellungen eines vierten Ausführungsbeispiels;
- Fig. 9 bis 10d: den vorstehenden Figuren entsprechende Darstellungen eines fünften Ausführungsbeispiels;
- Fig. 11 bis 12d: den vorstehenden Figuren entsprechende Darstellungen eines sechsten Ausführungsbeispiels;
- Fig. 13 bis 14d: den vorstehenden Figuren entsprechende Darstellungen eines siebten Ausführungsbeispiels;
- Fig. 15 bis 16d: den vorstehenden Figuren entsprechende Darstellungen eines achten Ausführungsbeispiels;
- Fig. 17 bis 18d: den vorstehenden Figuren entsprechende Darstellungen eines neunten Ausführungsbeispiels; und
- Fig. 19 bis 20d: den vorstehenden Figuren entsprechende Darstellungen eines zehnten Ausführungsbeispiels der Verbindungsvorrichtung.

Mit Bezug auf die beigefügten Zeichnungen ist die Erfindung an Ausführungsbeispielen erläutert, bei denen als Einschraubteil 2b, das Bestandteil der Verbindungsvorrichtung bildet, ein Cartridge-Ventil 2 vorgesehen ist, das in ein ein weiteres Bestandteil der Verbindungsvorrichtung bildendes Aufnahmeteil in Form eines Ventilblocks 4 einschraubbar ist.

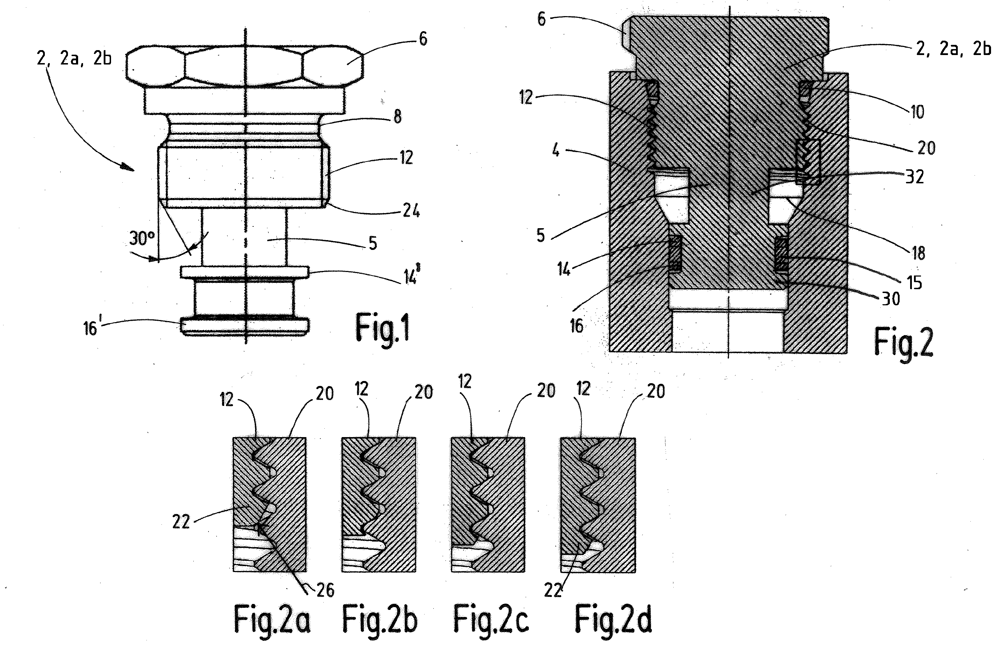

In den Zeichnungen, deren Fig. 1 bis 2d ein erstes Ausführungsbeispiel der Verbindungsvorrichtung zeigen, ist lediglich die Außenkontur des Cartridge-Ventils 2 dargestellt, das wie üblich am äußeren Ende seines Ventilkörpers 5 einen Außensechskant 6 aufweist. In geringem Abstand vom Außensechskant 6 befindet sich im Ventilkörper 5 eine Ringnut 8 als Sitz für einen Dichtring 10 (Fig. 2). An die Ringnut 8 schließt sich ein Außengewinde 12 an, an dessen Ende der Ventilkörper 5 in ein im Außendurchmesser verringertes Gehäuseendteil übergeht. An diesem bilden Stützringe 14 und 16, die einen Dichtring 15 einfassen (nur in Fig. 2 mit dem Bezugszeichen 15 angegeben) die Abdichtung des Ventilkörpers 5 im Einbauraum 18 des Ventilblocks 4. Die Stützringe 14 und 16 können vorzugsweise aus einem PTFE-Material bestehen. In seinem in Fig. 2 obenliegenden Eingangsbereich weist der Einbauraum 18 ein Innengewinde 20 als Muttergewinde auf. Da in den Zeichnungen lediglich die Außenkontur des Cartridge-Ventils 2 gezeigt ist, sind die bei Cartridge-Ventilen 2 üblichen Fluiddurchgänge zwischen dem Innenraum des Ventilkörpers 5 und dem Einbauraum 18 im Ventilblock 4 nicht sichtbar, wie auch die Fluidverbindungen innerhalb des Ventilblocks 4, die in den Einbauraum 18 einmünden.

Bei dem in Fig. 1 bis 2d gezeigten ersten Ausführungsbeispiel weist das Cartridge-Ventil 2 am ersten Gewindegang 22 (Fig. 2a und 2d) einen angefasten Anschnitt 24 auf, der nicht, wie bei Standard-Außengewinden üblich, mit 45° angefast ist, sondern, siehe Fig. 1, mit einem Winkel von 30° angefast ist. Wie den Detaildarstellungen der Fig. 2a bis 2d entnehmbar ist, die den Fortgang des Einschraubvorgangs bei einer ¼ Umdrehung, einer halben Umdrehung, einer ¾ Umdrehung bzw. einer ganzen Umdrehung verdeutlichen, führt die Anfasung mit verringertem Winkel zu einer Verringerung der Größe der Kontaktfläche des ersten Gewindeganges 22 an den Flanken des Innengewindes 20, wie in Fig. 2a mit einem Pfeil 26 bezeichnet, wodurch sich auch die Entstehung von Verschmutzungen verringert.

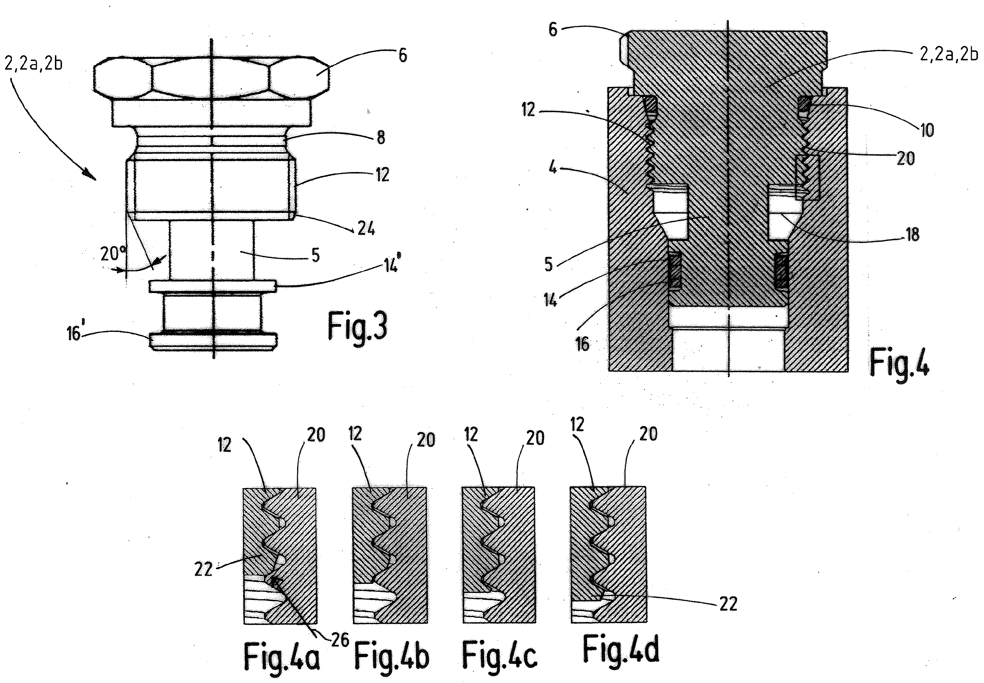

Die Fig. 3 bis 4d verdeutlichen ein zweites Ausführungsbeispiel, wobei, im Unterschied zum ersten Beispiel, der Winkel des angefasten Anschnitts 24 am ersten Gewindegang 22 des Außengewindes 12 von 30° auf 20° (s. Fig. 3) weiter verringert ist. Die mit Pfeil 26 in Fig. 4a bezeichnete Kontaktfläche ist dadurch in Richtung auf eine Linienberührung weiter verringert, mit entsprechend weiter verringerter Gefahr des Entstehens von Verschmutzungen.

Abgesehen von der geänderten Konturierung im Bereich des ersten Gewindeganges 32 bleiben die übrigen Komponenten des Einschraubteils 2b (Cartridge-Ventil 2) und des Aufnahmeteils (Ventilblock 4) gegenüber dem ersten Beispiel unverändert. Da sich auch die nachfolgend zu beschreibenden Ausführungsbeispiele nur hinsichtlich der geänderten Konturierung am Außengewinde 12 von dem zuvor Beschriebenen unterscheiden, beschränkt sich die Beschreibung dieser Ausführungsbeispiele auf die jeweiligen Konturabweichungen.

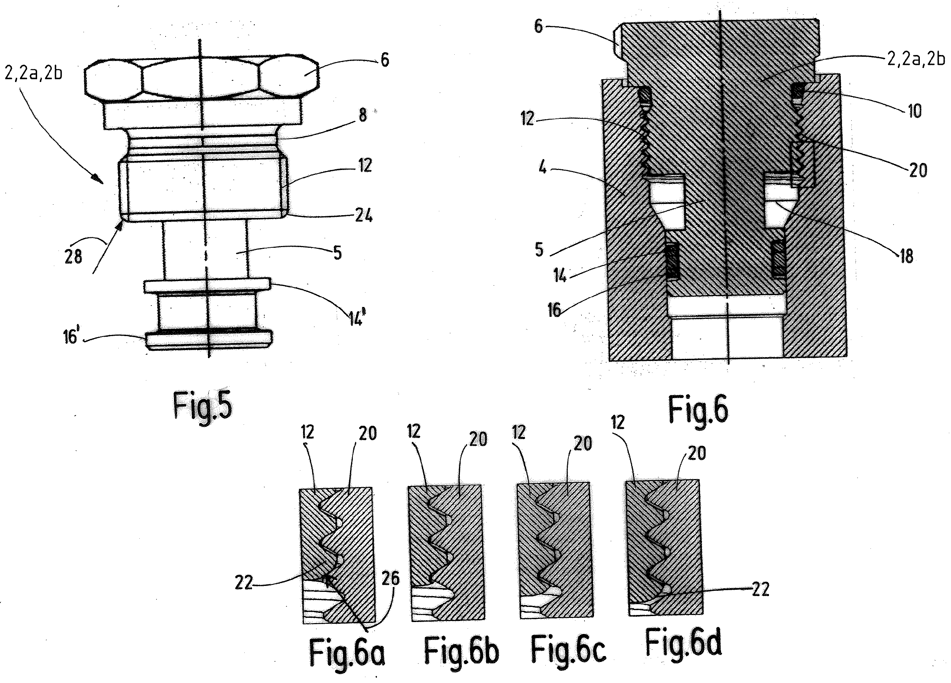

Die Fig. 5 bis 6d verdeutlichen ein drittes Ausführungsbeispiel. Dieses unterscheidet sich von den beiden ersten Ausführungsbeispielen dadurch, dass der erste Gewindegang 22 nicht mit einem flächigen Anschnitt 24 angefast ist, sondern, wie mit Pfeil 28 in Fig. 5 angegeben, einen gerundeten Abschnitt aufweist. Durch den Radienanschnitt nähert sich die Größe der mit Pfeil 26 angegebenen Kontaktfläche einer Linienberührung an, so dass sich die Entstehung von Verschmutzungen/Partikel verringert.

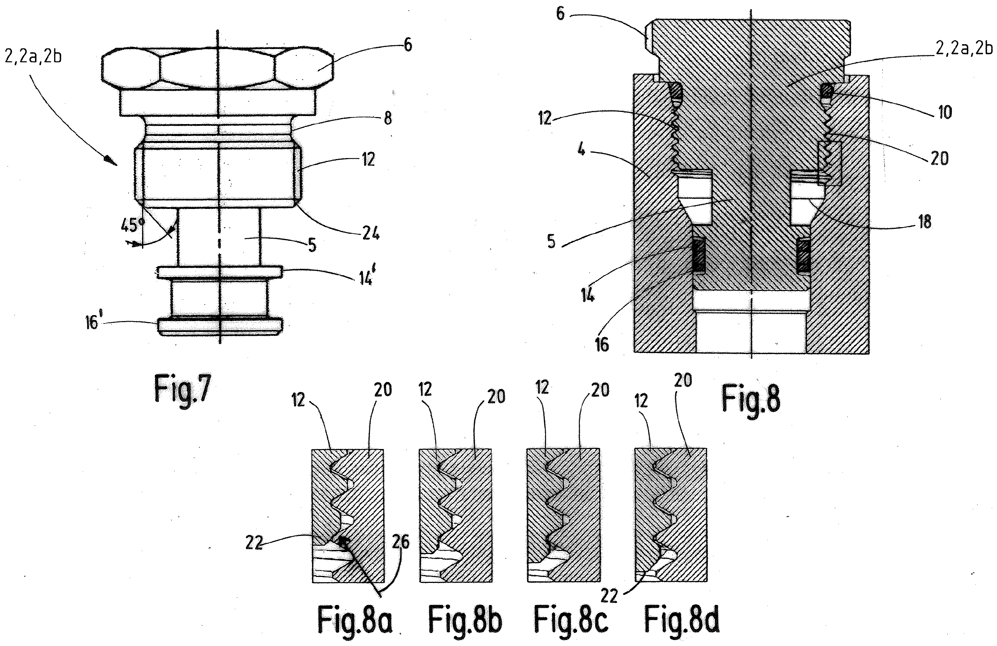

Bei dem in Fig. 7 bis 8d dargestellten vierten Ausführungsbeispiel ist der erste Gewindegang 22 bis auf den Kerndurchmesser in der Weise abgedreht, dass, vom Gewindegrund ausgehend, der erste Gewindegang 22 mit einer sich im Winkel von 10° aufweitenden Spirale gleicher Steigung überdreht wird. Zudem ist der Anschnitt 24, wie in Fig. 7 angegeben, im Winkel von 45° angefast. Dadurch werden eventuell entstehende Verschmutzungen/Partikel gekammert und vom Abfallen in den Einbauraum 18 abgehalten.

Sofern in den nachfolgenden Figuren der Einfachheit halber der erste Gewindegang nicht durchgehend mit 22 bezeichnet ist, ist aber derselbe Gewindegang gemeint, wie nach den vorstehenden Figuren.

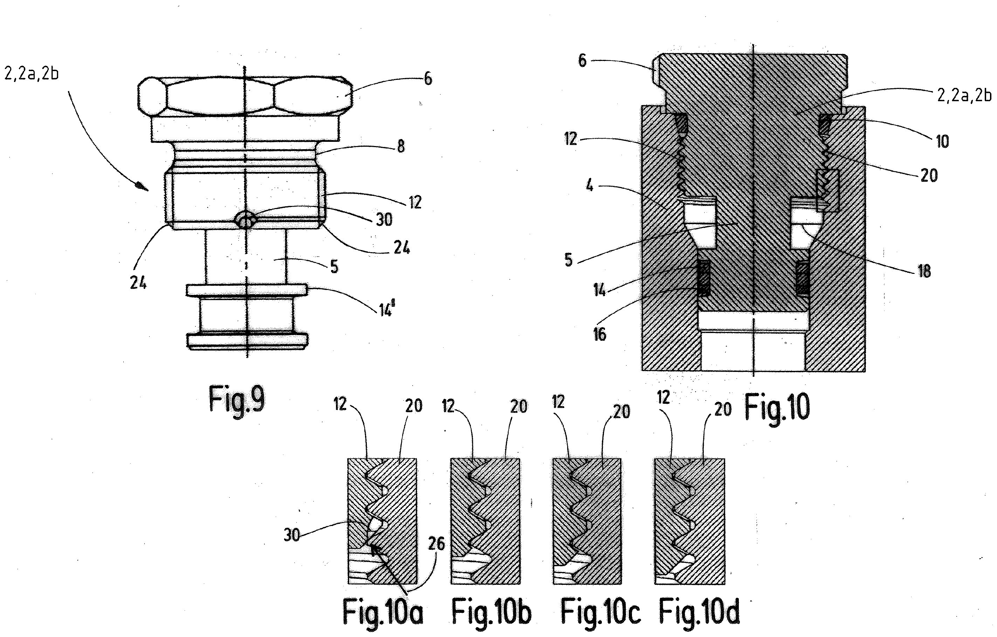

Die Fig. 9 bis 10d zeigen ein fünftes Ausführungsbeispiel. Bei diesem weist der erste Gewindegang 22 im Bereich des im Winkel von 45° angefasten Anschnitts 24 einen in Axialrichtung verlaufenden Längsschlitz 30 auf. Durch das Schlitzen des ersten Gewindegangs 22 wird der Eingriff des ersten Gewindegangs 22 des Außengewindes 12 in das Innengewinde 20 sanfter, was das Entstehen von Verschmutzungen/Partikel verringert. Wie in Fig. 10a mit dem Pfeil 26 angegeben, ist am ersten Gewindegang 22 im Bereich des Schlitzes 30 keine Kontaktfläche mit dem Muttergewinde gebildet.

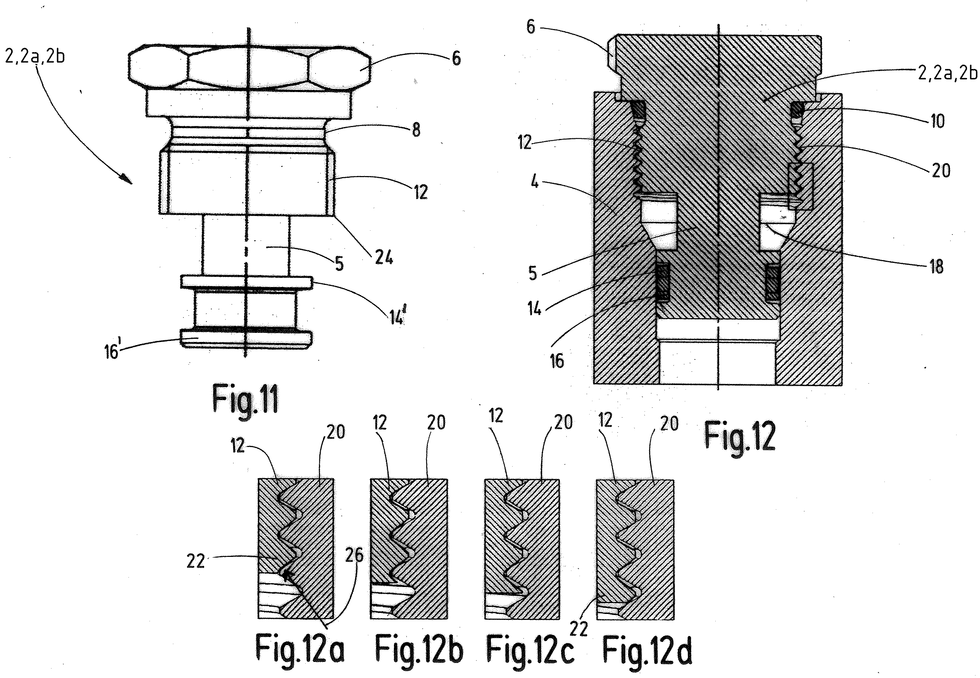

Die Fig. 11 bis 12d zeigen ein sechstes Ausführungsbeispiel. Bei diesem ist der erste Gewindegang 22 des Außengewindes 12 mit einem kleineren Flankenwinkel als die restlichen Gewindegänge ausgebildet. Der erste Gewindegang 22 bleibt daher ohne Kontaktfläche (Pfeil 26 von Fig. 12a), so dass der erste Gewindegang 22 keine Verschmutzung/Partikel verursacht.

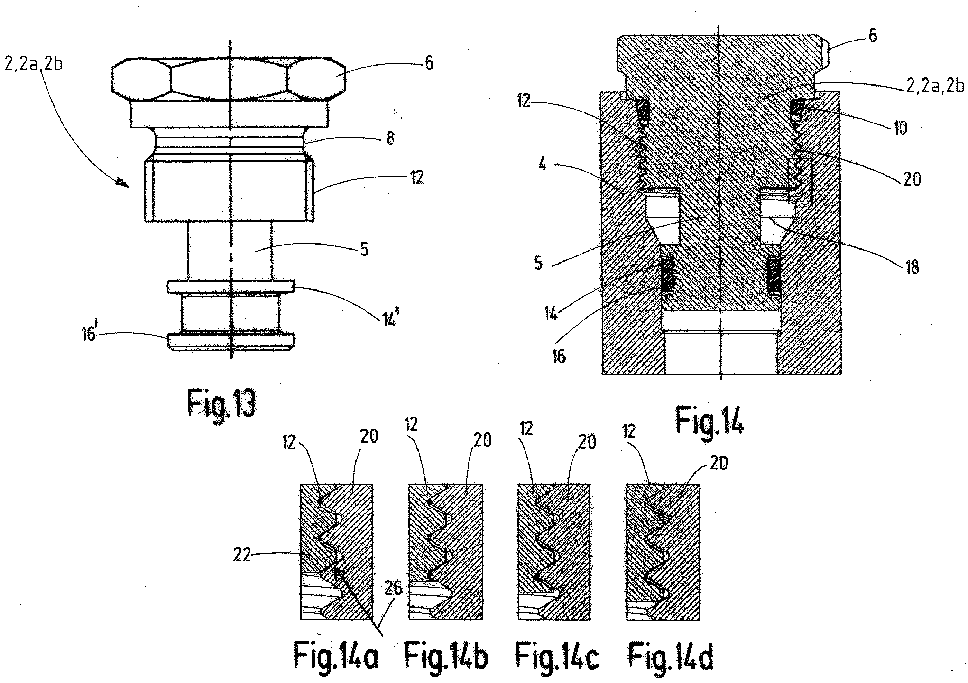

Bei dem siebten Ausführungsbeispiel von Fig. 13 bis 14d hat der erste Gewindegang 22 eine kleinere Steigung als die weiteren Gewindegänge. Der erste Gewindegang 22 bleibt daher ohne Kontaktfläche (s. Pfeil 26 von Fig. 14a). Der erste Gewindegang 22 verursacht daher keine Verschmutzung/Partikel und kann solche auch nicht vor sich herschieben.

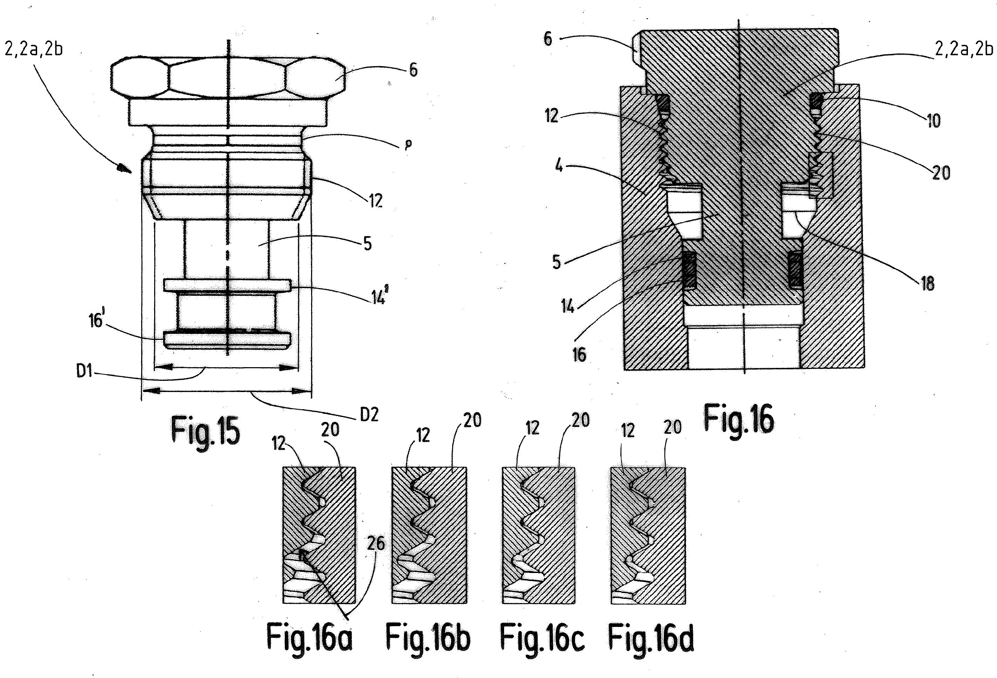

Bei dem in Fig. 15 bis 16d gezeigten achten Ausführungsbeispiel besteht die Konturänderung am das Einschraubteil 2b bildenden Cartridge-Ventil 2 darin, dass, ausgehend vom ersten Gewindegang 22 und entgegen der Einschraubrichtung, sich Flanken- und Kerndurchmesser des Außengewindes 12 in einem ersten Gewindeabschnitt von einem in Fig. 15 mit D1 bezeichneten Durchmesser zu einem mit D2 bezeichneten Durchmesser vergrößern. Hierdurch berührt das Außengewinde 12 erst ab dem dritten Gewindegang das Innengewinde 20 und kammert eventuell entstehende Verschmutzung/Partikel. Wie in Fig. 16a mit Pfeil 26 angedeutet, ist in den ersten Gängen keine Kontaktfläche gebildet. Insbesondere zeichnet sich diese Lösung dadurch aus, dass die Flankenwinkel der benachbarten Gewindegänge von Außen- und Innengewinde gleich und insoweit nicht voneinander verschieden sind. Dies ist auch von Vorteil bei den sonstigen Gewindelösungen nach den einzelnen Ausführungsbeispielen. Ferner verlaufen insbesondere zum Auslauf der Gewindegänge hin im Querschnitt gesehen die einander benachbarten Flanken parallel zueinander, so dass nur eine tangentiale Anlage zwischen den Flanken gegeben ist. Hierdurch sind Abschabvorgänge, die zu Bauteilverschleiß führen, vermieden. Auch dies ist in vorteilhafter Weise bei allen Ausführungsformen realisiert.

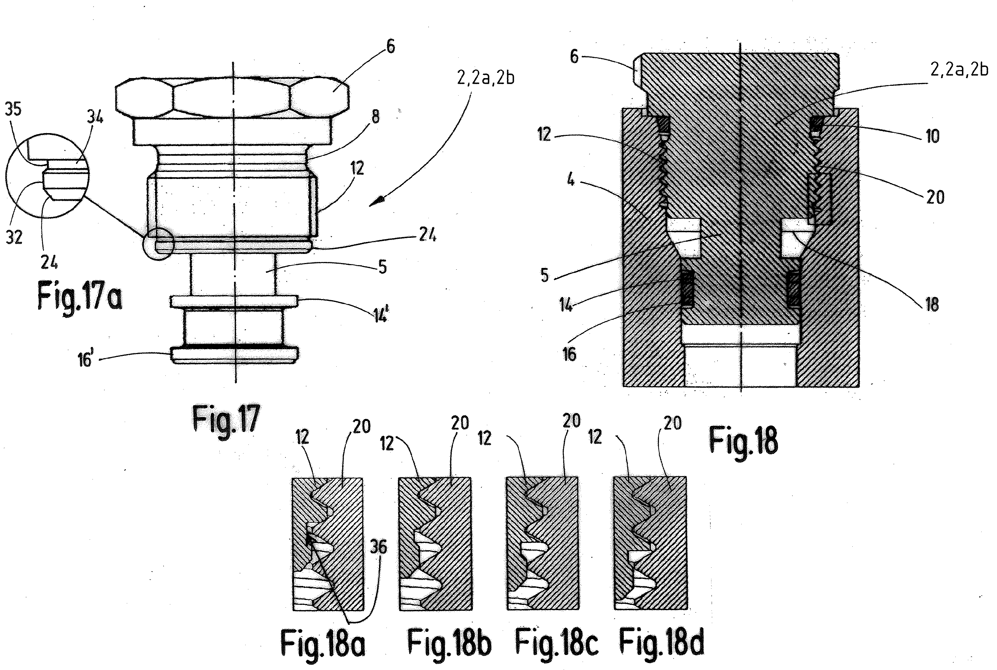

Bei dem in Fig. 17 bis 18d dargestellten neunten Ausführungsbeispiel ist, in Einschraubrichtung gesehen, hinter dem angefasten Anschnitt 24, s. Fig. 17a, ein zylindrischer Abschnitt 32 gebildet, an den sich eine im Durchmesser verringerte Ringnut 34 anschließt, die in den zylindrischen Abschnitt 32 über eine 45°-Anfasung 35 übergeht, s. Fig. 17a. Durch die vertiefte Ringnut 34 ist, wie in Fig. 18a mit Pfeil 36 angegeben, eine Kammerung gebildet, die verhindert, dass durch Einschrauben verursachte Verschmutzungen/Partikel in den Einbauraum 18 gelangen.

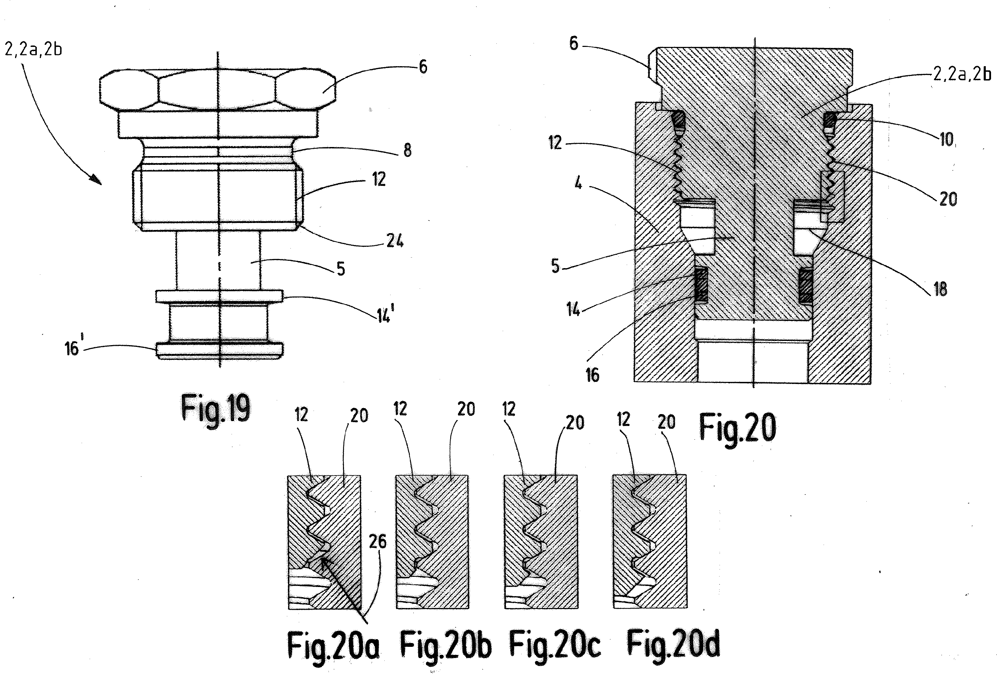

Bei dem in Fig. 19 bis 20d gezeigten zehnten Ausführungsbeispiel ist zumindest der erste Gewindegang 22, vorzugsweise ist dies bei den beiden ersten Gewindegängen der Fall, mit einem ungleichen Flankenwinkel gegenüber den sonstigen Gewindegängen des Cartridge-Ventils versehen, wobei vorzugsweise der erste Gewindegang 22 einen tangentialen Auslauf aufweist. Dadurch verursacht der erste Gewindegang 22, da ohne Kontaktfläche (s. Pfeil 26 in Fig. 20a), keine Verschmutzung/Partikel.

Das Abdichtsystem bestehend aus den beiden Stützringen 14, 16 und dem dazwischenliegenden Dichtring 15 sind in einer ringförmigen Aufnahmenut im Führungsteil 30 angeordnet, wobei der diesbezügliche Nutgrund nach außen hin jeweils von einem Ringflansch 14',16' begrenzt ist. Insoweit kann sich also in Blickrichtung auf die Figuren gesehen, der obere Stützring 14 sich am Ringflansch 14' abstützen und der untere Stützring 16 an dem unteren Ringflansch 16', der insoweit auch mit die untere Abschlusswand für das Führungsteil 30 bildet. Der einfacheren Darstellung wegen ist das vorstehend genannte Abdichtsystem nicht in allen Figuren eingezeichnet. Auch kann das Abdichtsystem anders ausgebildet sein, beispielsweise nur über einen Dicht- und einen Stützring verfügen oder einen mittigen Stützring mit zwei randseitigen Dichtringen aufweisen. In jedem Fall ist das Abdichtsystem gegenüber der Innenwand des Aufnahmeteils 4 im Durchmesser entsprechend angepasst, um eine Abdichtwirkung sicherstellen zu können. Ferner ist dergestalt über das Führungsteil 30 eine Führung des Einschraubteils 2b während des Einschraubvorgangs gewährleistet, insbesondere wenn zu Beginn des Einschraubvorganges am oberen Eintritt die ersten Gewindegänge miteinander in Eingriff kommen.

Wie des Weiteren die Figur 2 zeigt, schließt der obere Rand des Führungsteiles 30 bündig mit einem konischen Verlauf entlang der Innenwandseite des Aufnahmeteiles 4 ab, und zwar an dessen geringstem Durchmesser. Dieser in Richtung des Einschraubteils 2b nach oben hin sich konisch erweiternder Wandabschnitt geht in ein zylindrisches Wandteil mit vergrößertem Innendurchmesser im Aufnahmeteil 4 über, an den sich dann das Innengewinde des Aufnahmeteiles 4 nach oben hin anschließt. Zwischen dem unteren Ende des Einschraubteils 2b und dem oberen Ende des Führungsteils 30 ist demgemäß eine Verlängerung 32 vorhanden, die im Durchmesser entsprechend reduziert eine axiale Baulänge dergestalt aufweist, dass die Führungsfunktion des Führungsteils 30 zumindest mit Beginn des Einschraubvorgangs für das Einschraubteil 2b realisiert ist. Insbesondere lassen sich über das in der Verlängerung 32 an das Einschraubteil 2b anschließende Führungsteil 30 beim Einschrauben mögliche Verkantungen durch diese Führungseigenschaft ausschließen. Der einfacheren Darstellung wegen wurden nur in der Figur 2 die vorstehend genannten Bauteile Dichtring 15, Führungsteil 30 sowie Verlängerung 32 mit Bezugszeichen genannt.

## Patentansprüche

1. Cartridge-Ventil mit einem Ventilgehäuse (2a), das eine Verbindungsvorrichtung aufweist, zumindest bestehend aus einem Außengewinde (12) an einem Einschraubteil (2b), das in ein Innengewinde (20) eines Aufnahmeteils (4) einschraubbar ist,
wobei das Einschraubteil (2b) Bestandteil des Ventilgehäuses (2a) des Cartridge-Ventils ist, und
wobei das Aufnahmeteil (4) für die Aufnahme des Ventilgehäuses (2a) dient,
**dadurch gekennzeichnet,**
**dass** es während des Einschraubvorgangs zwischen den Gewinden (12, 20) zur Bildung von metallischen Spänen und/oder Partikeln als Bauteilverschmutzung kommt,
**dass** in Einschraubrichtung gesehen zumindest der erste Gewindegang (22) des Einschraubteils (2b) derart mit einer Konturänderung gegenüber den sonstigen Gewindegängen dieses Gewindes (12) versehen ist, dass die Bauteilverschmutzung unterbunden oder im Wesentlichen unterbunden ist und/oder Verschmutzungen vom Abfallen in einen Einbauraum (18) des Aufnahmeteils (4) abgehalten sind,
**dass** das Einschraubteil (2b) ein Führungsteil (30) aufweist, das über eine Verlängerung (32) mit reduziertem Durchmesser gegenüber dem Einschraub- (2b) und dem Führungsteil (30) an das Einschraubteil (2b) anschließt,
**dass** die axiale Länge der Verlängerung (32) derart gewählt ist, dass spätestens mit Eingriff des ersten Gewindeganges des Einschraubteils (2b) in den zugehörigen Gewindegang des Aufnahmeteils (4) das Führungsteil (30) in Anlage mit den benachbart angeordneten Wandteilen des Aufnahmeteils (4) kommt, und
**dass** das Cartridge-Ventil am äußeren Ende seines Ventilkörpers (5) einen Außensechskant (6) aufweist, von dem sich in geringem Abstand im Ventilkörper (5) eine Ringnut (8) als Sitz für einen Dichtring (10) befindet.

2. Cartridge-Ventil nach Anspruch 1, **dadurch gekennzeichnet, dass** die Konturänderung aus einem angefasten Anschnitt (24) am ersten Gewindegang (22) gebildet ist, dessen Winkel kleiner 40°, bevorzugt zwischen 20° und 30°, gewählt ist oder aus einem gerundeten Anschnitt (28) besteht, so dass die Kontaktfläche (26) des ersten Gewindeganges (22) des Einschraubteils (2b) im zugeordneten Gewindeabschnitt des Aufnahmeteils (4) reduziert ist.

3. Cartridge-Ventil nach Anspruch 1 oder 2, **dadurch gekennzeichnet, dass** die Konturänderung darin besteht, dass der erste Gewindegang (22) des Einschraubteils (2b) bis auf den Kerndurchmesser desselben abgedreht ist, dass vorzugsweise hierfür der erste Gewindegang (22) des Einschraubteils (2b) vom Gewindegrund aus mit einer sich im Winkel von mindestens 10° aufweitenden Spirale gleicher Steigung überdreht ist und dass der angefaste Anschnitt (24) vorzugsweise einen Winkel von 45° aufweist.

4. Cartridge-Ventil nach einem der vorstehenden Ansprüche, **dadurch gekennzeichnet, dass** die Konturänderung durch Einbringen mindestens eines Längsschlitzes (30) parallel zur Einschraubrichtung in den ersten Gewindegang (22) des Einschraubteils (2b) realisiert ist und dass der angefaste Anschnitt (24) vorzugsweise einen Winkel von 45° aufweist.

5. Cartridge-Ventil nach einem der vorstehenden Ansprüche, **dadurch gekennzeichnet, dass** die Konturänderung darin besteht, dass der erste Gewindegang (22) des Einschraubteils (2b) einen kleineren Flankenwinkel als die nachfolgenden Gewindegänge desselben aufweist, so dass zumindest teilweise keine Kontaktfläche (26) zwischen dem ersten Gewindegang (22) des Einschraubteils (2b) und dem zugeordneten Gewindegang des Aufnahmeteils (4) besteht.

6. Cartridge-Ventil nach einem der vorstehenden Ansprüche, **dadurch gekennzeichnet, dass** die Konturänderung darin besteht, dass die Gewindegänge von Außen- (12) und Innengewinde (20) eine unterschiedliche Steigung zueinander aufweisen, vorzugsweise dass der erste Gewindegang (22) des Einschraubteils (2b) eine kleinere Steigung aufweist als die nachfolgenden Gewindegänge desselben, so dass zumindest teilweise keine Kontaktfläche (26) zwischen dem ersten Gewindegang (22) des Einschraubteils (2b) und dem zugeordneten Gewindegang des Aufnahmeteils (4) besteht.

7. Cartridge-Ventil nach einem der vorstehenden Ansprüche, **dadurch gekennzeichnet, dass** die Konturänderung darin besteht, dass ausgehend vom ersten Gewindegang (22) des Einschraubteils (2b) sich Flanken- sowie Kerndurchmesser des Außengewindes (12) gleichermaßen verändern, so dass vorzugsweise erst ab dem dritten Gewindegang des Innengewindes (20) des Aufnahmeteils (4) dieses in Anlage mit den zugeordneten Gewindegängen des Außengewindes (12) des Einschraubteils (2b) kommt.

8. Cartridge-Ventil nach einem der vorstehenden Ansprüche, **dadurch gekennzeichnet, dass** die Konturänderung darin besteht, dass zumindest der erste Gewindegang (22), vorzugsweise die ersten zwei Gewindegänge des Einschraubteils (2b), mit einem ungleichen Flankenwinkel zu den sonstigen Gewindegängen des Einschraubteils (2b) versehen sind und dass vorzugsweise der erste Gewindegang (22) des Einschraubteils (2b) einen tangentialen Auslauf aufweist.

9. Cartridge-Ventil nach einem der vorstehenden Ansprüche, **dadurch gekennzeichnet, dass** das Führungsteil (30) außenumfangsseitig ein Abdichtsystem aufweist, vorzugsweise bestehend aus zwei Stützringen (14,16) und einem dazwischenliegenden Dichtring (15).

10. Cartridge-Ventil nach einem der vorstehenden Ansprüche, **dadurch gekennzeichnet, dass** der Außendurchmesser des Führungsteils (30) an den Innendurchmesser des Aufnahmeteils (4) angepasst ist, vorzugsweise im Einbauzustand das Abdichtsystem in Anlage mit dem Aufnahmeteil (4) ist.

## Claims

1. Cartridge valve comprising a valve housing (2a) having a connection device, consisting at least of an external thread (12) on a screw-in part (2b) that can be screwed into an internal thread (20) of a receiving part (4),
the screw-in part (2b) being a component of the valve housing (2a) of the cartridge valve, and
the receiving part (4) being used for receiving the valve housing (2a),
**characterised in that**
metal chips and/or particles are formed between the threads (12, 20) during the screwing-in process as component debris,
**in that**, when viewed in the screwing-in direction, at least the first thread pitch (22) of the screw-in part (2b) is provided with a contour change compared with the other thread pitches of that thread (12) in such a way that component debris is prevented or substantially prevented and/or debris is kept from falling into an installation space (18) of the receiving part (4),
**in that** the screw-in part (2b) has a guide part (30) which adjoins the screw-in part (2b) via an extension (32) that has a reduced diameter compared with the screw-in part (2b) and the guide part (30),
**in that** the axial length of the extension (32) is selected such that, at the latest when the first thread pitch of the screw-in part (2b) meshes with the associated thread pitch of the receiving part (4), the guide part (30) comes into abutment with the adjacently arranged wall parts of the receiving part (4), and
**in that** the cartridge valve has an external hex (6) on the outer end of its valve body (5), an annular groove (8) being arranged at a slight distance from said external hex in the valve body (5) as a seat for a sealing ring (10).

2. Cartridge valve according to claim 1, **characterised in that** the contour change either is formed at the first thread pitch (22) by a chamfered notch (24) of which the angle is selected to be less than 40°, preferably between 20° and 30°, or consists of a rounded notch (28), such that the contact surface (26) of the first thread pitch (22) of the screw-in part (2b) is reduced in the assigned threaded portion of the receiving part (4).

3. Cartridge valve according to claim 1 or claim 2, **characterised in that** the contour change consists in the first thread pitch (22) of the screw-in part (2b) being removed, by turning, as far as the core diameter thereof and, for this purpose, preferably consists in the first thread pitch (22) of the screw-in part (2b) being overturned starting from the thread root in a constant-pitch spiral that widens by an angle of at least 10°, and consists in the chamfered notch (24) preferably having an angle of 45°.

4. Cartridge valve according to any of the preceding claims, **characterised in that** the contour change is implemented by making at least one longitudinal slot (30) in the first thread pitch (22) of the screw-in part (2b) in parallel with the screwing-in direction, and **in that** the chamfered notch (24) preferably has an angle of 45°.

5. Cartridge valve according to any of the preceding claims, **characterised in that** the contour change consists in the first thread pitch (22) of the screw-in part (2b) having a smaller flank angle than the following thread pitches thereof, such that, at least in part, there is no contact surface (26) between the first thread pitch (22) of the screw-in part (2b) and the assigned thread pitch of the receiving part (4).

6. Cartridge valve according to any of the preceding claims, **characterised in that** the contour change consists in the thread pitches of the external thread (12) and internal thread (20) having a different lead from each other, and preferably consists in the first thread pitch (22) of the screw-in part (2b) having a smaller lead than the following thread pitches thereof, such that, at least in part, there is no contact surface (26) between the first thread pitch (22) of the screw-in part (2b) and the assigned thread pitch of the receiving part (4).

7. Cartridge valve according to any of the preceding claims, **characterised in that** the contour change consists in flank diameters and core diameters of the external thread (12) changing in a similar manner starting from the first thread pitch (22) of the screw-in part (2b), such that, preferably, the internal thread (20) of the receiving part (4) does not come into abutment with the assigned thread pitches of the external thread (12) of the screw-in part (2b) until after the third thread pitch of the internal thread.

8. Cartridge valve according to any of the preceding claims, **characterised in that** the contour change consists in at least the first thread pitch (22), preferably the first two thread pitches, of the screw-in part (2b) being provided with a different flank angle from the other thread pitches of the screw-in part (2b), and preferably consists in the first thread pitch (22) of the screw-in part (2b) having a tangential runout.

9. Cartridge valve according to any of the preceding claims, **characterised in that** the guide part (30) has a sealing system on its external circumference, said sealing system preferably consisting of two support rings (14, 16) and a sealing ring (15) therebetween.

10. Cartridge valve according to any of the preceding claims, **characterised in that** the external diameter of the guide part (30) is adapted to the internal diameter of the receiving part (4), and the sealing system preferably abuts the receiving part (4) in the installed state.

## Revendications

1. Soupape cartouche comprenant un corps (2a) de soupape, qui a un dispositif d'assemblage constitué au moins d'un filetage (12) extérieur sur une partie (2b) à visser, qui peut être vissée dans un filetage (20) intérieur (taraudage) d'une partie (4) de réception,
dans laquelle la partie (2b) à visser fait partie du corps (2a) de la soupape cartouche, et
dans laquelle la partie (4) de réception sert à la réception du corps (2a) de la soupape,
**caractérisée**
**en ce qu'**il se produit, pendant l'opération de vissage entre les filetages (12, 20), la formation de copeaux métalliques et/ou de particules comme pollution de pièces,
**en ce que**, considéré dans le sens du vissage, au moins le premier filet de vis (22) de filetage de la partie (2b) à visser est pourvue d'une modification de contour par rapport aux autres filets de vis de ce filetage (12), de manière à supprimer ou à supprimer sensiblement la pollution de pièces et/ou des pollutions de déchets dans un espace (18) de la partie (4) de réception,
**en ce que** la partie (2b) à visser a une partie (30) de guidage, qui, par un prolongement (32) de diamètre réduit par rapport à la partie (2b) à visser et la partie (30) de guidage, se raccorde à la partie (2b) à visser,
**en ce que** la longueur axiale du prolongement (32) est choisie de manière à ce qu'au plus tard, avec la pénétration du premier filet de vis de filetage de la partie (2b) à visser dans le filet de vis de filetage associé de la partie (4) de réception, la partie (30) de guidage vienne en contact avec les parties de paroi disposées au voisinage de la partie (4) de réception, et
**en ce que** la soupape cartouche a, à l'extrémité extérieure de son corps (5) de soupape, un hexagone (6) extérieur, duquel part, comme siège d'une bague (10) d'étanchéité, une gorge (8) annulaire à petite distance du corps (5) de la soupape.

2. Soupape cartouche suivant la revendication 1, **caractérisée en ce que** la variation du contour est formée d'une entaille (24) biseautée sur le premier filet de vis (22) de filetage, dont l'angle est choisi plus petit que 40°, en étant de préférence entre 20° et 30°, ou d'une entaille (28) arrondie, de manière à ce que la surface (26) de contact du premier filet de vis (22) de filetage de la partie (2b) à visser soit réduit dans le segment de filetage associé de la partie (4) de réception.

3. Soupape cartouche suivant la revendication 1 ou 2, **caractérisée en ce que** la modification du contact consiste **en ce que** le premier filet de vis (22) de filetage de la partie (2b) à visser est relevée autour jusqu'au diamètre de noyau de celle-ci, **en ce que**, de préférence à cet effet, le premier filet de vis (22) du filetage de la partie (2b) à visser est tournée, à partir du fond du filetage, avec une spirale de même pas s'élargissant angulairement d'au moins 10°, et **en ce que** l'entaille (24) biseautée a de préférence un angle de 45°.

4. Soupape cartouche suivant l'une des revendications précédentes, **caractérisée en ce que** la modification de contour est réalisée par l'introduction d'au moins une fente (30) longitudinale parallèlement à la direction de vissage dans le premier filet de vis (22) du filetage de la partie (2b) à visser, et **en ce que** l'entaille (24) biseautée a de préférence un angle de 45°.

5. Soupape cartouche suivant l'une des revendications précédentes, **caractérisée en ce que** la modification de contour consiste **en ce que** le premier filet de vis (22) du filetage de la partie (2b) à visser a un angle de flanc plus petit que les filets de vis suivants du filetage, de sorte qu'au moins en partie, il n'y a pas de surface (26) de contact entre le premier filet de vis (22) du filetage de la partie (2b) à visser et le filet de vis du filetage associé de la partie (4) de réception.

6. Soupape cartouche suivant l'une des revendications précédentes, **caractérisée en ce que** la modification de contour consiste **en ce que** les filet de vis du filetage (12) extérieur et du filetage (20) intérieur ont un pas différent l'un par rapport à l'autre, de préférence **en ce que** le premier filet de vis (22) du filetage de la partie (2b) à visser a un pas plus petit que les filets de vis suivants, de sorte qu'au moins en partie, il n'y a pas de surface (26) de contact entre le premier filet (22) de vis de la partie (2b) à visser et le filet de vis associé de la partie (4) de réception.

7. Soupape cartouche suivant l'une des revendications précédentes, **caractérisée en ce que** la modification de contour consiste **en ce que**, à partir du premier filet (22) de vis de la partie (2b) à visser, des diamètres de flancs et de noyaux du filetage (12) extérieur se modifient de la même façon, de sorte que de préférence, à partir du troisième filet du filetage (20) intérieur de la partie (4) de réception, celle-ci vient en contact avec les filets associés du filetage (12) extérieur de la partie (2b) à visser.

8. Soupape cartouche suivant l'une des revendications précédentes, **caractérisée en ce que** la modification de contour consiste **en ce qu'**au moins le premier filet (22) du filetage, de préférence les deux premiers filets du filetage, de la partie (2b) à visser sont pourvus d'angles de flanc inégaux par rapport aux autres filetages de filets de la partie (2b) à visser, et **en ce que**, de préférence, le premier filet (22) du filetage de la partie (2b) à visser a une sortie tangentielle.

9. Soupape cartouche suivant l'une des revendications précédentes, **caractérisée en ce que** la partie (30) de guidage a, du côté du pourtour extérieur, un système d'étanchéité constitué de préférence de deux bagues (14, 16) d'appui et d'une bague (15) d'étanchéité intermédiaire.

10. Soupape cartouche suivant l'une des revendications précédentes, **caractérisée en ce que** le diamètre extérieur de la partie (30) de guidage est adapté au diamètre intérieur de la partie (4) de réception, de préférence, dans l'état monté, le système d'étanchéité est en contact avec la partie (4) de réception.
